# EUROPÄISCHE PATENTSCHRIFT

(11) **EP 0 566 777 B1**
(45) Veröffentlichungstag und Bekanntmachung des Hinweises auf die Patenterteilung: **24.05.1995**
(21) Anmeldenummer: 92115051.2
(22) Anmeldetag: 03.09.1992
(51) Int. Cl.: A47J 45/07

(54) **Griffbefestigung an Kochgeschirren oder dergleichen**
Fixation of a handle to a cooking vessel or the like
Fixation d'une poignée à un récipient de cuisson ou à un récipient similaire

(30) Priorität: 24.04.1992 DE 9205573 U
(43) Veröffentlichungstag der Anmeldung: 27.10.1993
(73) Patentinhaber: HEINRICH BAUMGARTEN KG SPEZIALFABRIK FÜR BESCHLAGTEILE, 57290 Neunkirchen (DE)
(72) Erfinder: Fischbach, Wolfgang, W-5244 Daaden (DE)
(74) Vertreter: Missling, Arne, Dipl.-Ing.

(56) Entgegenhaltungen:
- AT-A- 222 283
- DE-A- 2 553 308
- DE-U- 8 604 562
- US-A- 2 501 940

## Beschreibung

Die Erfindung betrifft eine kraft- und eventuell auch formschlüssige Griffbefestigung für Kochgeschirre oder dergleichen wie Kochtöpfe oder Bratpfannen, wobei als ein erstes Befestigungsstück ein Griff mit dem Kochgeschirr mittels eines an diesem starr befestigten, ein zweites Befestigungsstück bildenden Verankerungselementes verbunden und dabei zwischen dem Verankerungselement und dem Griff ein Funktionselement vorgesehen ist, durch das der Griff manuell leicht auf das Verankerungselement aufschiebbar, jedoch nur mit einem Trennwerkzeug von diesem wieder lösbar ist.

Eine solche Griffbefestigung ist aus dem Dokument DE-A-25 53 308 bekannt und hat den Vorteil, daß sie bei dem Hersteller schnell und bequem ausgeführt werden kann, sich aber bei der Benutzung kaum von selbst zu lösen vermag. Im allgemeinen ist diese Griffbefestigung auf lange Sicht funktionstüchtig. Sie wird insbesondere bei Hohlseitengriffen, bei Steckseitengriffen und bei Steckstielen verwendet, wenn diese mit einem Kochtopf oder einer Bratpfanne verbunden werden sollen. Allen diesen Griffen ist gemeinsam, daß ein loses Funktionselement - zumeist ein federndes Bauteil - zwischen dem Griff und einem an dem Kochgeschirr angenieteten oder angeschweißten Verankerungselement dafür sorgt, daß der Griff nach dem Zusammenbau nicht demontierbar ist, höchstens eventuell unter erheblicher Abzugskraft, wenn die Griffbefestigung als reine Kraftschluß(Reibschluß)Verbindung gestaltet ist. In diesem Falle kann es aber auch im Laufe der Zeit bei der Benutzung dazu kommen, daß sich die Griffbefestigung lockert und dann nicht mehr funktionstüchtig ist. Deshalb ist es besser, wenn die Verbindung auch einen formschlüssigen Anteil aufweist und damit auch dann noch den Griff sichert, wenn sich dieser etwas gelockert hat.

Eine solche starre Griffbefestigung ist aber nicht immer günstig. Es gibt eine ganze Reihe von Fällen, wo die Griffe wieder gelöst werden müssen. So kann das Kochgeschirr bereits unbrauchbar sein, ohne daß die daran befindlichen Griffe weggeworfen werden müßten. Umgekehrt kann auch ein Griff defekt sein, wenn das Kochgeschirr noch verwendbar ist, so daß der Griff nur ausgetauscht werden müßte. Es ist auch nicht praktisch, ein Kochgeschirr mit lockeren Griffen zu verwenden. Bei der Montage kann ein fehlerhafter Zusammenbau erfolgen, so daß die Teile wieder mühsam getrennt werden müssen. Man hat bisher dabei meist Beschädigungen in Kauf nehmen müssen, weil die erforderlichen Trennwerkzeuge die hohen Trennkräfte für ein wenig starres und gleichzeitig relativ empfindliches Kochgeschirr nicht langsam und sukzessive genug erzeugen konnte.

Es ist auch aus der Druckschrift DE 25 53 308 A1 bereits bekannt, in dem Stielgriff eines Kochgeschirrs eine Ausnehmung anzubringen, durch die mittels eines hindurchgeführten Trennwerkzeuges eine die form- und kraftschlüssige Verbindung der Befestigungsstücke herstellende und verriegelnde Biegefeder so verformbar ist, daß diese Verbindung dabei getrennt wird. Die (beim Trennen nicht sichtbare) Biegefeder aber muß einerseits kräftig genug ausgebildet sein, damit sich die Verbindung beim Gebrauch des Kochgeschirrs nicht zu leicht lockert und selbsttätig gelöst wird, andererseits ist ein zu großer Widerstand beim Trennen mittels des Trennwerkzeuges unerwünscht, weil ein solcher hoher Widerstand nicht dosiert genug und nur mit Anstrengung überwindbar ist.

Die Erfindung hat sich demzufolge die Aufgabe gestellt, bei einer Griffbefestigung der eingangs näher bezeichneten Art dafür zu sorgen, daß die beschriebenen Mängel behoben werden und diese auf einfache Weise getrennt werden kann, ohne daß die verbundenen Bauteile dabei beschädigt werden. Die Trennkräfte sollen weitgehend ruckfrei aufgebracht werden können. Es sollen keine zusätzlichen Bauteile erforderlich sein und die Anordnung soll einfach und billig herstellbar und mit einfachem Trennwerkzeug behandelbar sein.

Erfindungsgemäß wird die Aufgabe dadurch gelöst, daß an der Unterseite der Griffbefestigung und in deren Bereich in den Befestigungsstücken Ausnehmungen vorgesehen sind in der Weise, daß zwei benachbarte, einander zugekehrte Flächen der Ausnehmungen, die zueinander parallel oder nur leicht geneigt und voneinander beabstandet sind und ungefähr senkrecht auf der beim Aufschieben oder Lösen des Griffes erforderlichen Richtung stehen, von außen für das Trennwerkzeug in der Weise zugänglich sind, daß mit dem Trennwerkzeug auf diese Flächen ein die Griffbefestigung lösendes Kräftepaar aufbringbar ist, wobei die Flächen so voneinander beabstandet sind, daß als Trennwerkzeug ein Hebel, beispielsweise ein Schraubenzieher, mit einer großen Hebelübersetzung verwendbar ist.

Auf diese überraschend einfache Weise werden die beschriebenen Nachteile des Standes der Technik behoben, ohne daß dabei der Vorteil der bekannten Griffbefestigung beseitigt werden müßte, daß diese zwar leicht füg-, aber nur schwer lösbar ist. Trotzdem ist auch während des Betriebes nicht mit einer Störung der Griffbefestigung zu rechnen, weil der Betreiber kaum eine Lösung des Griffes vornehmen wird, solange die Griffbefestigung voll funktionsfähig ist. Ist dies aber nicht mehr der Fall, dann sind andererseits auch keinerlei Fachkenntnisse erforderlich, um eine Trennung des Griffes von dem Kochgeschirr herbeizuführen.

Ein Schraubenzieher ist in jedem Haushalt vorhanden, und es bedarf nur geringer Geschicklichkeit, um das erforderliche Drehmoment so vorsichtig aufzubringen, daß die Griffbefestigung langsam und stetig gelöst und demzufolge eine Beschädigung eines Bauteiles vermieden wird. Die Ausnehmungen für das Werkzeug sind so angeordnet, daß ein Hebeln direkt an der Topfwandung und somit die damit verbundenen Beschädigungen vermieden werden.

Je nach Konstruktion kann es günstig sein, wenn die Ausnehmungen schlitzförmig oder wenn sie nutförmig ausgebildet sind. In beiden Fällen sind keinerlei zusätzliche Arbeitsgänge bei der Herstellung und beim Zusammenbau erforderlich, sondern lediglich jeweils eine geringfügige Änderung an dem für die Herstellung des betreffenden Bauteiles verwendeten Schnitt- oder Spritzwerkzeuges.

Die Erfindung ist vielseitig anwendbar. So ist es möglich, daß der Griff als Hohlseitengriff ausgebildet ist, der aus einem Griffstück und zwei Holmen besteht und bei dem die Verankerungselemente in Hohlräumen der beiden Holme versenkt sind, wobei in jedem der Holme eine schlitzförmige Ausnehmung vorgesehen ist, oder daß der Griff als Steckseitengriff ausgebildet ist, der aus einem Griffstück und zwei Holmen besteht und in eine die Holme berandende, an dem Kochgeschirr ortsfeste Blechhülle als Verankerungselement gesteckt ist und wobei je eine schlitzförmige Ausnehmung in dem Verankerungselement im Bereich der Holme des Griffes und je eine nutförmige Ausnehmung in jedem Holm vorgesehen sind, oder daß der Griff als Steckstiel ausgebildet ist, der aus einem Griffstück und einem mit diesem einstückigen Haltestück besteht, das in eine an dem Kochgeschirr befestigten Blechhülle als Verankerungselement gesteckt ist und wobei eine nutförmige Ausnehmung am Rande des Verankerungselementes und in dem Haltestück vorgesehen ist. Die Erfindung kann also bei allen modernen Griffbefestigungen dieser Art angewendet werden, ohne daß jeweils ein spezielles Trennwerkzeug erforderlich wäre. Im Einzelfall ist es allenfalls notwendig, daß das Trennwerkzeug nach seiner Hebelung noch um seine Achse gedreht wird, um die bereits gelöste Griffbefestigung - mit nur geringem Kraftaufwand - endgültig aufzutrennen.

Dazu ist es besonders vorteilhaft, wenn die an dem Griffstück für den Angriff des Trennwerkzeuges befindliche Fläche treppenartig abgesetzt ist. In vielen Fällen genügt es aber, wenn diese Fläche eben ist, dann nämlich, wenn sie etwas gegen ihre korrespondierende Fläche an dem anderen Befestigungsstück geneigt ausgeführt ist. Es ist in diesen Fällen möglich, das Trennwerkzeug nachzusetzen, so daß die Trennung weiter vereinfacht wird.

Weitere Vorteile und die näheren Einzelheiten werden nachstehend anhand der Zeichnung an drei Ausführungsbeispielen erläutert. Es zeigen:
- Fig. 1: eine erfindungsgemäße Griffbefestigung an einem Hohlseitengriff in einer Druntersicht in zusammengebautem Zustand,
- Fig. 2: die Griffbefestigung aus Fig. 1, aber mit einem bereits gelösten Holm,
- Fig. 3: eine Draufsicht zu Fig. 1 während der Trennung eines Holmes,
- Fig. 4: eine Einzelheit A aus Fig. 3, etwas vergrößert,
- Fig. 5: eine erfindungsgemäße Griffbefestigung an einem Steckseitengriff in einer Druntersicht in zusammengebautem Zustand,
- Fig. 6: die Griffbefestigung aus Fig. 5, aber mit einem bereits gelösten Holm,
- Fig. 7: eine Draufsicht zu Fig. 5 während der Trennung eines Holmes,
- Fig. 8: eine Einzelheit B aus Fig. 7, etwas vergrößert,
- Fig. 9: eine Einzelheit C aus Fig. 8, wiederum etwas vergrößert, in einer ersten Form,
- Fig. 10: eine Einzelheit C aus Fig. 8, wiederum etwas vergrößert, in einer zweiten Form,
- Fig. 11: eine erfindungsgemäße Griffbefestigung an einem Steckstiel, während der Trennung,
- Fig. 12: eine Einzelheit D aus Fig. 11, etwas vergrößert, in einer ersten Form,
- Fig. 13: eine Draufsicht zu Fig. 12,
- Fig. 14: eine Einzelheit E aus Fig. 12, wiederum etwas vergrößert,
- Fig. 15: eine Einzelheit D aus Fig. 11, etwas vergrößert, in einer zweiten Form,
- Fig. 16: eine Draufsicht zu Fig. 15 und
- Fig. 17: eine Einzelheit F aus Fig. 15, wiederum etwas vergrößert,
sämtlich in schematischer Darstellung.

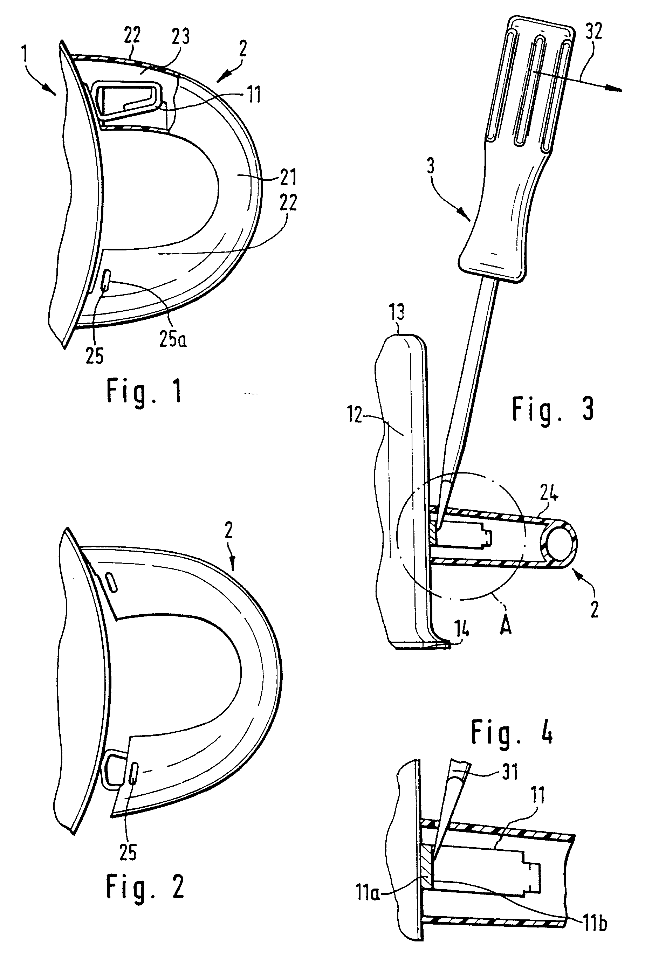

In einem ersten Ausführungsbeispiel der Fig. 1 bis 4 ist ein Kochgeschirr 1 mit einem Griff 2 verbunden, der als Hohlseitengriff mit einem Griffstück 21 und zwei Holmen 22 ausgeführt ist. In jedem Holm 22 befindet sich ein Hohlraum 23, um ein Verankerungselement 11 zu überfangen, das fest an dem Kochgeschirr 1 angebracht ist. Das Verankerungselement 11 ist hier eine Art Bügel, der an einer zylindrischen Wand 12 des Kochgeschirres 1 durch Widerstandspunktschweißung o.ä. befestigt ist, wie das vor allem in Fig. 3 zu sehen ist; hier kann man auch einen Boden 13 und eine Öffnungsberandung 14 des Kochgeschirres 1 erkennen. Zwischen den Holmen 22 und dem Verankerungselement 11 sorgt ein in der Zeichnung weggelassenes Funktionselement dafür, daß der Griff 2 zwar leicht auf die Verankerungselemente 11 aufschiebbar ist, jedoch umgekehrt diese nicht ohne weiteres wieder verlassen kann. Derartige Funktionselemente sind im allgemeinen Bauteile mit Federeigenschaften, die in vielfältiger Ausführung branchenüblich und dem Fachmann geläufig sind und auf deren Darstellung vor allem auch deshalb verzichtet werden kann, weil sie mit der Erfindung in keinem unmittelbaren Zusammenhang stehen.

An der Unterseite 24 des Griffes 2 ist in jedem Holm 22 eine Ausnehmung 25 vorgesehen, die bis in den Hohlraum 23 reicht und, wie die Fig. 1 und 2 zeigen, schlitzförmig ausgeführt ist. In Fig. 4 ist genau zu sehen, wie durch die Ausnehmung 25 die Trennung des Griffes 2 von dem Verankerungselement 11 mit Hilfe eines Trennwerkzeuges 3 vorgenommen werden kann. Das Verankerungselement 11 ist mit einem Steg 11a an der Wand 12 angeschweißt, und seine Fläche 11b dient als Widerlager für eine Klinge 31 des Trennwerkzeuges 3; die Oberfläche der Wand 12 wird dabei demzufolge gar nicht in Anspruch genommen. Die Ausnehmung 25 ist so gelegt, daß deren längs gerichtete Fläche 25a, die der Fläche 11b zugekehrt ist, gerade die Einführung der Klinge 31 zuläßt. Mit dem Trennwerkzeug 3 kann auf die Griffbefestigung demzufolge ein lösendes Drehmoment aufgebracht werden, wenn es in dem durch den Richtungspfeil 32 veranschaulichten Drehsinn betätigt wird.

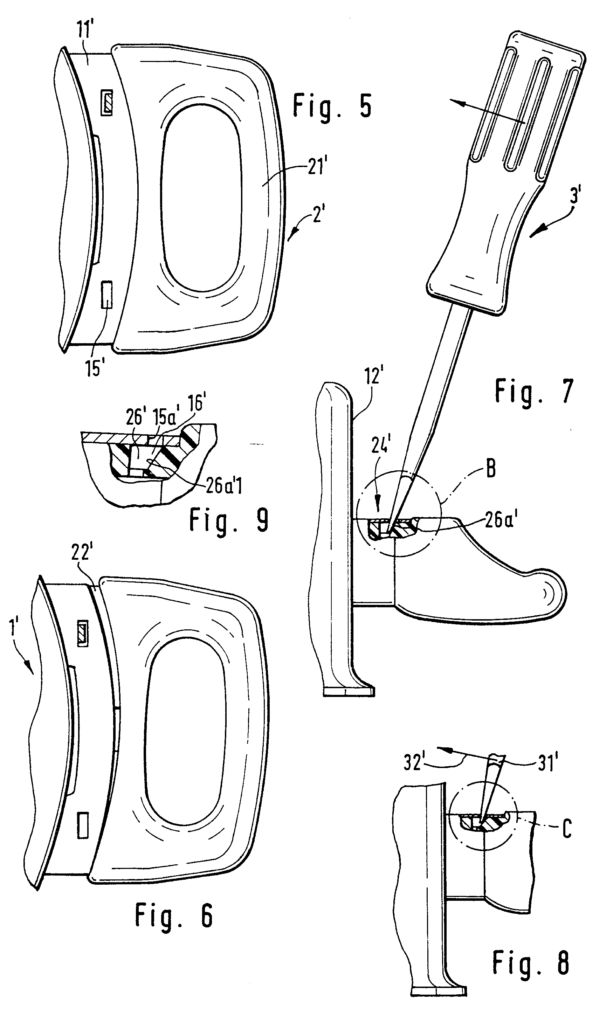

In einem zweiten Ausführungsbeispiel der Fig. 5 bis 10 ist ein Kochgeschirr 1' mit einem Griff 2' verbunden, der als Steckseitengriff mit einem Griffstück 21' und zwei massiven oder - aus fertigungstechnischen hohlen - Holmen 22' ausgeführt ist. Hier sind alle Teile mit einfach angestrichenen Bezugszeichen versehen, sonst bei gleichen oder entsprechenden Teilen auch mit dem gleichen Bezugszeichen wie in dem ersten Ausführungsbeispiel gekennzeichnet.

Als Verankerungselement 11' dient eine Blechhülle, welche die Partie der Holme 22' allseitig umgibt und die im übrigen fest mit der Wand 12' des Kochgeschirres 1' verbunden ist; je eine Ausnehmung 15' in dem Verankerungselement 11' auf der Unterseite 24' der Griffbefestigung in dem Bereich der Holme 22' ist ebenfalls schlitzförmig ausgeführt, eine jeweils zugehörige Ausnehmung 16' in den Holmen 22' hingegen nutförmig.

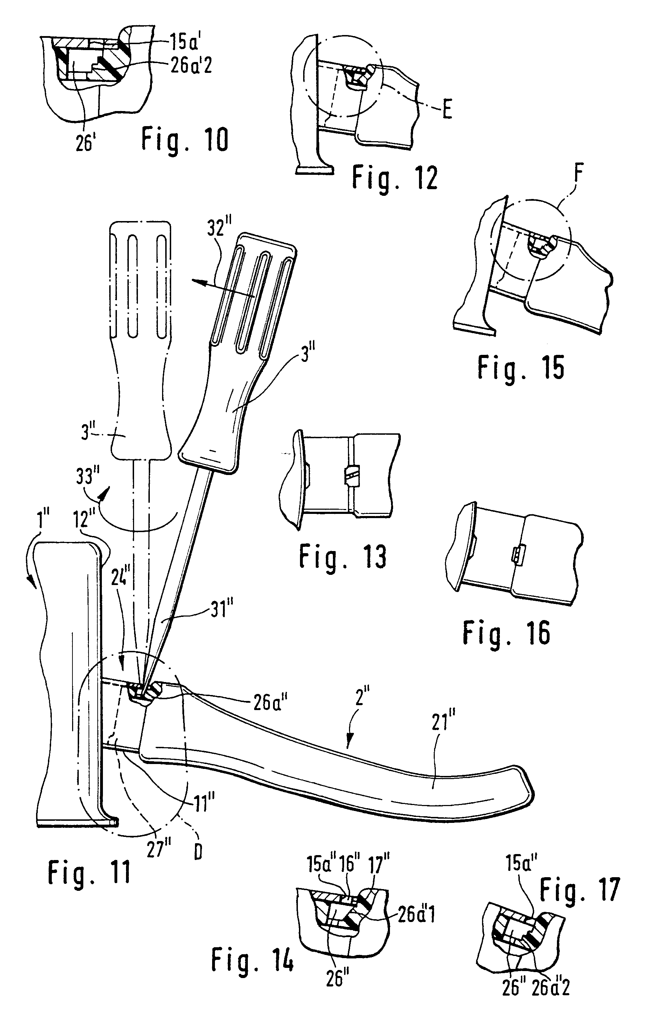

Zwei korrespondierende Flächen 15a' der Ausnehmung 15' und 26a' der Ausnehmung 26' (Fig. 9 und 10) sind wiederum als Widerlager für eine Klinge 31' eines Trennwerkzeuges 3' zur Erzeugung eines zur Lösung der Griffbefestigung geeigneten Drehmomentes vorgesehen; allerdings ist der durch einen Richtungspfeil 32' veranschaulichte Drehsinn nun umgekehrt wie beim ersten Ausführungsbeispiel.

In den Fig. 9 und 10 wird auch deutlich, daß die Flächen 26a' unterschiedlich gestaltet sein können; in der Variante der Fig. 9 ist eine ebene, geneigte Fläche 26a'1, hingegen in der Variante der Fig. 10 eine treppenartig abgesetzte Fläche 26a'2 verwendet. Andere Formen sind denkbar.

In einem dritten Ausführungsbeispiel der Fig. 11 bis 17 ist ein Kochgeschirr 1'' mit einem Griff 2'' verbunden, der als Steckstiel aus einem Griffstück 21'' und einem an diesem einstückig vorgesehenen Haltestück 27'' besteht. Hier sind alle Teile mit doppelt angestrichenen Bezugszeichen versehen, sonst bei gleichen oder entsprechenden Teilen auch mit dem gleichen Bezugszeichen wie in den beiden bereits beschriebenen Ausführungsbeispielen gekennzeichnet.

Als Verankerungselement 11'' dient wiederum eine Blechhülle, welche das Haltestück 27'' allseitig umgibt und die im übrigen fest mit der Wand 12'' des Kochgeschirres 1'' verbunden ist. Eine nutförmige Ausnehmung 16'' ist in dem dem Griff 2'' zugekehrten Rand 17'' des Verankerungselementes 11'' vorgesehen, und ebenfalls eine nutförmige Ausnehmung 26'' in dem Haltestück 27'' des Griffes 2''. Die Situation entspricht etwa derjenigen des zweiten Ausführungsbeispieles, so daß auch hier die Flächen 15a'' und 26a'' zur Übertragung des Lösemomentes verwendet werden, das von der Klinge 31'' eines Trennwerkzeuges 3'' der Griffbefestigung eingeprägt wird. In ganz ähnlicher Weise kann die Fläche 26'' dabei als ebene Fläche 26a''1 entsprechend Fig. 16 oder als abgetreppte Fläche 26a''2 gemäß Fig. 17 gestaltet sein. Wie in der Fig. 11 zu erkennen ist, kann der Steckstiel in zwei Etappen von dem Kochgeschirr 1'' gelöst werden: zunächst wird das Trennwerkzeug 3'' im Sinne des Richtungspfeiles 32'' verschwenkt, und danach wird es gedreht (strichpunktierte Darstellung), was durch den Drehpfeil 33'' veranschaulicht wird.

## Patentansprüche

1. Kraft- und eventuell auch formschlüssige Griffbefestigung für Kochgeschirre (1; 1'; 1'') oder dergleichen wie Kochtöpfe oder Bratpfannen, wobei als ein erstes Befestigungsstück ein Griff (2; 2'; 2'') mit dem Kochgeschirr (1; 1'; 1'') mittels eines an diesem starr befestigten, ein zweites Befestigungsstück bildenden Verankerungselementes (11; 11'; 11'') verbunden und dabei zwischen dem Verankerungselement (11; 11'; 11'') und dem Griff (2; 2'; 2'') ein Funktionselement vorgesehen ist, durch das der Griff (2; 2'; 2'') manuell leicht auf das Verankerungselement (11; 11'; 11'') aufschiebbar, jedoch nur mit einem Trennwerkzeug von diesem wieder lösbar ist,
dadurch gekennzeichnet, daß
an der Unterseite (24; 24'; 24'') der Griffbefestigung und in deren Bereich in den Befestigungsstücken Ausnehmungen (25; 15'; 26'; 16''; 26'') vorgesehen sind in der Weise, daß zwei benachbarte, einander zugekehrte Flächen (11b; 25a; 15a'; 26a'; 15a''; 26a'') der Ausnehmungen (25; 15'; 26'; 16''; 26''), die zueinander parallel oder nur leicht geneigt und voneinander beabstandet sind und ungefähr senkrecht auf der beim Aufschieben oder Lösen des Griffes (2; 2'; 2'') erforderlichen Richtung (32; 32'; 32'') stehen, von außen für das Trennwerkzeug (3; 3'; 3'') in der Weise zugänglich sind, daß mit dem Trennwerkzeug (3; 3'; 3'') auf diese Flächen (11b; 25a; 15a'; 26a'; 15a''; 26a'') ein die Griffbefestigung lösendes Kräftepaar aufbringbar ist, wobei die Flächen (11b; 25a; 15a'; 26a'; 15a''; 26a'') so voneinander beabstandet sind, daß als Trennwerkzeug (3; 3'; 3'') ein Hebel, beispielsweise ein Schraubenzieher, mit einer großen Hebelübersetzung verwendbar ist.

2. Griffbefestigung nach Anspruch 1, dadurch gekennzeichnet, daß die Ausnehmungen (25; 15') schlitzförmig ausgebildet sind.

3. Griffbefestigung nach Anspruch 1, dadurch gekennzeichnet, daß die Ausnehmungen (26'; 16''; 26'')) nutförmig ausgebildet sind.

4. Griffbefestigung nach Anspruch 1 und 2, dadurch gekennzeichnet, daß der Griff (2) als Hohlseitengriff ausgebildet ist, der aus einem Griffstück (21) und zwei Holmen (22) besteht und bei dem die Verankerungselemente (11) in Hohlräumen (23) der beiden Holme (22) versenkt sind, wobei in jedem der Holme (22) eine schlitzförmige Ausnehmung (25) vorgesehen ist.

5. Griffbefestigung nach Anspruch 1 bis 3, dadurch gekennzeichnet, daß der Griff (2') als Steckseitengriff ausgebildet ist, der aus einem Griffstück (21') und zwei Holmen (22') besteht und in eine die Holme (22') berandende, an dem Kochgeschirr (1') ortsfeste Blechhülle als Verankerungselement (11') gesteckt ist und wobei je eine schlitzförmige Ausnehmung (15') in dem Verankerungselement (11') im Bereich der Holme (22') des Griffes (2') und je eine nutförmige Ausnehmung (26') in jedem Holm (22') vorgesehen sind.

6. Griffbefestigung nach Anspruch 1 und 3, dadurch gekennzeichnet, daß der Griff (2'') als Steckstiel ausgebildet ist, der aus einem Griffstück (21'') und einem mit diesem einstückigen Haltestück (27'') besteht, das in eine an dem Kochgeschirr (1'') befestigte Blechhülle als Verankerungselement (11'') gesteckt ist und wobei eine nutförmige Ausnehmung (16''; 26'') am Rande (17'') des Verankerungselementes (11'') und in dem Haltestück (27'') vorgesehen ist.

7. Griffbefestigung nach einem der Ansprüche 1 bis 6, dadurch gekennzeichnet, daß die an dem Griffstück (21'; 21'') für den Angriff des Trennwerkzeuges (3'; 3") befindliche Fläche (26a'2; 26a''2) treppenartig abgesetzt ist.

8. Griffbefestigung nach einem der Ansprüche 1 bis 6, dadurch gekennzeichnet, daß die an dem Griffstück (21'; 21'') für den Angriff des Trennwerkzeuges (3'; 3'') befindliche Fläche (26a'1; 26a''1) eben ist.

## Claims

1. A non-positive and optionally also positively-locking handle fastening for cooking vessels (1; 1'; 1'') or the like, such as cooking pots or frying pans, in which a handle (2; 2'; 2'') acting as a first fastening part is connected to the cooking vessel (1; 1'; 1'') via an anchoring member (11; 11'; 11'') rigidly connected to the said vessel and forming a second fastening part, and a function element is provided between the anchoring member (11; 11'; 11'') and the handle (2; 2'; 2''), and by means of the said element the handle (2; 2'; 2'') can easily be pushed manually on to the anchoring member (11; 11'; 11'') but can only be released therefrom with the aid of a parting tool,
**characterised in that**
recesses (25; 15'; 26'; 16''; 26'') are provided on the underside (24; 24'; 24'') of the handle fastening and in the same region in the fastening parts, in such a manner that two neighbouring facing surfaces (11b; 25a; 15a'; 26a'; 15a''; 26a'') of the recesses (25; 15'; 26'; 16''; 26'') - which are mutually parallel or only slightly inclined, and are spaced and substantially vertical to the direction (32; 32'; 32'') required for pushing on or releasing the handle (2; 2'; 2'') - are accessible to the parting tool (3; 3'; 3'') from the exterior in such a way that a force couple releasing the handle fastening can be applied by means of the parting tool (3; 3'; 3'') to the said surfaces (11b; 25a; 15a'; 26a'; 15a''; 26a''), and the said surfaces (11b; 25a; 15a'; 26a'; 15a''; 26a'') are thereby distanced from one another in such a manner that a lever, for example a screwdriver, with a large amount of leverage, can be used as a parting tool (3; 3'; 3'').

2. A handle fastening in accordance with claim 1, **characterised in that** the recesses (25; 15') are slot-shaped.

3. A handle fastening in accordance with claim 1, **characterised in that** the recesses (26'; 16''; 26'') are groove-shaped.

4. A handle fastening in accordance with claims 1 and 2, **characterised in that** the handle (2) is formed as a hollow side handle, comprising a handle part (21) and two side pieces (22), and the anchoring members (11) are sunk into hollow spaces (23) in the two side pieces (22), a slot-shaped recess (25) being provided in each of the said side pieces (22).

5. A handle fastening in accordance with claims 1 to 3, **characterised in that** the handle (2') is formed as a plug-in side handle comprising a handle part (21') and two side pieces (22'), and is inserted into a sheet metal casing which acts as an anchoring member (11') and is stationary in relation to the cooking vessel (1') and surrounds the side pieces (22'), and a respective slot-shaped recess (15') is provided in the anchoring member (11') in the vicinity of the side pieces (22') of the handle (2'), and a respective groove-shaped recess (26') is provided in each side piece (22').

6. A handle fastening in accordance with claims 1 and 3, **characterised in that** the handle (2'') is formed as a plug-in pan handle comprising a handle part (21'') and a retaining part (27'') formed integrally therewith, the said pan handle being inserted into a sheet metal casing attached to the cooking vessel (1'') as an anchoring member (11''), and a groove-shaped recess (16''; 26'') is provided at the edge (17'') of the anchoring member (11'') and in the retaining part (27'').

7. A handle fastening in accordance with one of claims 1 to 6, **characterised in that** the surface (26a'2; 26a''2) located on the handle part (21'; 21'') for application of the parting tool (3'; 3'') is stepped.

8. A handle fastening in accordance with one of claims 1 to 6, **characterised in that** the surface (26a'1; 26a''1) located on the handle part (21'; 21'') for application of the parting tool (3'; 3'') is planar.

## Revendications

1. Fixation par conjugaison de forces et éventuellement également par correspondance de formes de poignée pour récipients de cuisson (1 ; 1' ; 1'') ou récipients similaires tels que des casseroles ou des poêles à frire, fixation dans laquelle une poignée (2 ; 2'; 2'') constituant une première pièce de fixation est assemblée avec le récipient de cuisson (1; 1'; 1'') au moyen d'un élément d'ancrage (11 ; 11'; 11'') fixé de manière inamovible sur celui-ci, et constituant une deuxième pièce de fixation, et un élément fonctionnel est prévu entre l'élément d' ancrage (11 ; 11' ; 11'') et la poignée (2 ; 2'; 2'') grâce auquel il est possible d'emmancher facilement à la main la poignée (2 ; 2'; 2'') sur l'élément d'ancrage (11 ; 11' ; 11''), ladite poignée ne pouvant toutefois être de nouveau désolidarisée de celui-ci qu'avec un outil de séparation,
caractérisée en ce que,
des évidements (25 ; 15 ' ; 26' ; 16''; 26'') sont prévus sur le côté inférieur (24 ; 24' ; 24'') de la fixation de poignée et, dans le secteur de celle-ci, dans les pièces de fixation, de manière telle que deux surfaces (11b ; 25a ; 15a' ; 26a' ; 15a'' ; 26a'') des évidements (25; 15' ; 26' ; 16'' ; 26''), qui sont adjacentes et en regard l'une de l'autre, parallèles ou seulement légèrement inclinées l'une par rapport à l'autre, et éloignées l'une de l'autre, sensiblement perpendiculaires à la direction (32 ; 32' ; 32'') à suivre pour emmencher ou libérer la poignée (2 ; 2' ; 2''), et sont accessibles à l'outil de séparation (3 ; 3' ; 3'') depuis l'extérieur de manière telle qu'il est possible, à l'aide de l'outil de séparation (3 ; 3' ; 3'') d'appliquer à ces surfaces (11b ; 25a ; 15'a; 26'a ; 15a'' ; 26a'') un couple de forces libérant la fixation de poignée,
les surfaces (11b ; 25a ; 15'a ; 26'a; 15a'' ; 26a'') sont éloignées l'une de l'autre de manière telle qu'il est possible d'utiliser à titre d'outil de séparation (3 ; 3'; 3'') un levier, par exemple un tournevis, permettant une force de levier importante.

2. Fixation de poignée selon la revendication 1, caractérisée en ce que les évidements (25 ; 15') sont conformés comme des fentes.

3. Fixation de poignée selon la revendication 1, caractérisée en ce que les évidements (25 ; 15') sont conformés comme des encoches.

4. Fixation de poignée selon l'une quelconque des revendications 1 et 2, caractérisée en ce que la poignée (2) est conformée comme une poignée latérale creuse, qui est constituée d'une partie de préhension (21) et de deux parties latérales (22), et dans laquelle les éléments d'ancrage (11) sont enfoncés dans des cavités (23) des deux parties latérales (22), un évidement en forme de fente (25) étant prévu dans chacune des parties latérales (22).

5. Fixation de poignée selon l'une quelconque des revendications 1 à 3, caractérisée en ce que la poignée (2') est conformée comme une poignée latérale enfichable, qui est constituée d'une partie de préhension (21') et de deux parties latérales (22') et qui est enfichée dans une enveloppe de tôle (11') solidaire du récipient de cuisson (1'), entourant les parties latérales (22'), et constituant un élément d'ancrage, un évidement (15') en forme de fente étant prévu dans l'élément d'ancrage (11') dans le secteur de chacune des parties latérales (22') de la poignée (2') et un évidement (26') en forme d'encoche étant prévu dans chaque partie latérale (22').

6. Fixation de poignée selon l'une quelconque des revendications 1 et 3, caractérisée en ce que la poignée (2'') est conformé comme une queue enfichable, qui est constituée d'une partie de préhension (21'') et d'une pièce de maintien (27'') d'un seul tenant avec ladite partie de préhension, et qui est enfichée dans une enveloppe de tôle solidaire du récipient de cuisson (1'') et constituant un élément d'ancrage (11''), un évidement (16'' ; 26'') en forme d'encoche étant prévu sur le bord (17'') de l'élément d'ancrage (11'') et dans la pièce de maintien (27'').

7. Fixation de poignée selon l'une quelconque des revendications 1 à 6, caractérisée en ce que la surface (26a'2 ; 26a''2) située sur la partie de préhension (21' ; 21'') et permettant la venue en prise de l'outil de séparation (3' ; 3'') forme un décrochement vers le bas.

8. Fixation de poignée selon l'une quelconque des revendications 1 à 6, caractérisée en ce que la surface (26a'2 ; 26a''2) située sur la partie de préhension (21' ; 21'') et permettant la venue en prise de l'outil de séparation (3'; 3'') est plane.
